# EUROPÄISCHE PATENTANMELDUNG

(11) **EP 2 341 223 A2**
(43) Veröffentlichungstag der Anmeldung: **06.07.2011**
(21) Anmeldenummer: 10197263.6
(22) Anmeldetag: 29.12.2010
(51) Int. Cl.: F01N 3/20, F01N 3/08, F01N 13/02

(54) **Vorrichtung und Verfahren zur Reinigung des Abgases einer Brennkraftmaschine**

(30) Priorität: 30.12.2009 DE 102009060758
(71) Anmelder: Huber Automotive AG, 73347 Mühlhausen im Täle (DE)
(72) Erfinder: Huber, Martin, 73337 Bad Überkingen (DE)
(74) Vertreter: Schaumburg, Thoenes, Thurn, Landskron, Eckert

(57) **Zusammenfassung**

Die Erfindung betrifft eine Vorrichtung (10) und ein Verfahren zur Reinigung des Abgases einer Brennkraftmaschine (12). Die Vorrichtung (10) umfasst einen SCR-Katalysator (14) und ein Abgaszuführsystem (18) zum Zuführen des von der Brennkraftmaschine (12) abgegebenen Abgases zu dem SCR-Katalysator (14). Das Abgaszuführsystem (18) umfasst einen ersten Zweig (20) und einen parallel dazu geschalteten zweiten Zweig (22). Im zweiten Zweig (22) ist ein Stickoxidspeicher (30) angeordnet, wobei in einem ersten Betriebszustand zumindest ein Teil der Stickoxide, die in dem Abgas, das den zweiten Zweig (22) durchströmt, enthalten sind, durch den Stickoxidspeicher (30) speicherbar sind und in einem zweiten Betriebszustand die gespeicherten Stickoxide wieder freigegeben und dem SCR-Katalysator (14) zuführbar sind.

## Beschreibung

Die Erfindung betrifft eine Vorrichtung zur Reinigung des Abgases einer Brennkraftmaschine. Die Vorrichtung umfasst einen SCR-Katalysator zur selektiven katalytischen Reduktion von in dem Abgas befindlichen Stickoxiden und ein Abgaszuführsystem, das von der Brennkraftmaschine abgegebene Abgas dem SCR-Katalysator zuführt. Ferner betrifft die Erfindung ein Verfahren zur Reinigung des Abgases einer Brennkraftmaschine.

Bei SCR-Katalysatoren wird stromaufwärts einer Hydrolysestrecke wässrige Harnstofflösung in das Abgaszuführsystem eingespritzt. Innerhalb der Hydrolysestrecke wird aus dem in der wässrigen Harnstofflösung enthaltenen Harnstoff Ammoniak erzeugt, das dem SCR-Katalysator zugeführt wird und in diesem mit den im Abgas enthaltenen Stickoxiden zu Stickstoff und Wasser reagiert. Für diese selektive katalytische Reduktion benötigt der SCR-Katalysator eine Mindesttemperatur, die auch als Arbeitstemperatur bezeichnet wird, und die bei einem Kaltstart der Brennkraftmaschine noch nicht erreicht ist. In dieser Warmlaufphase, also in der Phase bis die Arbeitstemperatur erreicht ist, werden die im Abgas enthaltenen Stickoxide nicht bzw. zumindest nicht vollständig zu Stickstoff und Wasser reduziert.

Aus dem Dokument DE 103 24 013 A1 ist eine Vorrichtung zur Reinigung des Abgases einer Brennkraftmaschine bekannt, bei der Abgas in einem ersten Schritt einen Speicherkatalysator und in einem weiteren Schritt einen SCR-Katalysator durchströmt. Der Speicherkatalysator ist derart ausgebildet, dass er bei einem Kaltstart der Brennkraftmaschine im Abgas enthaltene Stickoxide zumindest teilweise speichern kann und diese wieder freigibt, sobald der SCR-Katalysator seine Arbeitstemperatur erreicht hat. Der Speicherkatalysator und der SCR-Katalysator sind in Reihe geschaltet, so dass das gesamte von der Brennkraftmaschine abgegebene Abgas den Speicherkatalysator durchströmt, auch wenn der SCR-Katalysator bereits seine Arbeitstemperatur erreicht hat und eine Speicherung von Stickoxiden durch den Speicherkatalysator nicht mehr erfolgt.

Aus dem Dokument DE 10 2008 026 191 A1 ist ein Kraftfahrzeug mit einer Brennkraftmaschine und einer Abgasnachbehandlungseinrichtung bekannt. Die Abgasnachbehandlungseinrichtung umfasst einen Stickoxidabsorber und einen SCR-Katalysator, wobei der Stickoxidabsorber zumindest unter einer vorgegebenen Desorptionstemperatur aus ihm zugeführten Abgasen Stickoxide durch Einspeicherung entfernt und bei Überschreiten der Desorptionstemperatur gespeichertes Stickoxid thermisch desorbiert an das Abgas abgegeben werden kann. Auch bei dieser Abgasnachbehandlungseinrichtung sind der Stickoxidabsorber und der SCR-Katalysator in Reihe geschaltet.

Nachteilig an den aus den beiden Dokumenten bekannten Abgasnachbehandlungseinrichtungen ist, dass der Stickoxidspeicher von dem gesamten Abgas, das von der Brennkraftmaschine erzeugt wird, durchströmt wird, unabhängig davon, wie viele Stickoxide im Abgas enthalten sind und welche Temperatur der SCR-Katalysator hat. Dementsprechend muss der Stickoxidspeicher entsprechend groß gewählt werden, dass er von dem gesamten Abgas durchströmt werden kann. Hierdurch wird viel Bauraum benötigt und es entstehen hohe Kosten. Ferner ist es bei dieser Ausführungsform nachteilig, dass lediglich eine Speicherung von Stickoxiden bei einem Kaltstart erfolgt, und der Stickoxidspeicher keine Stickoxide mehr speichert, wenn die Abgasnachbehandlungseinrichtung die Arbeitstemperatur erreicht hat. Eine Steuerung der dem SCR-Katalysator zugeführten Stickoxidmenge ist nicht möglich.

Es ist Aufgabe der Erfindung, eine Vorrichtung und ein Verfahren zur Reinigung des Abgases einer Brennkraftmaschine anzugeben, bei denen nur eine möglichst geringe Anzahl von Stickoxiden an die Umwelt abgegeben wird.

Diese Aufgabe wird durch eine Vorrichtung mit den Merkmalen des Anspruchs 1 sowie durch ein Verfahren mit den Merkmalen des unabhängigen Verfahrensanspruchs gelöst. Vorteilhafte Weiterbildungen der Erfindung sind in den abhängigen Patentansprüchen angegeben.

Erfindungsgemäß umfasst das Abgaszuführsystem zwei parallel zueinander geschaltete Zweige zum Zuführen des Abgases von der Brennkraftmaschine zu dem SCR-Katalysator. Der erste Zweig ist insbesondere als ein Abgaskanal ausgebildet, durch den das Abgas lediglich geführt wird und nicht behandelt wird. Im zweiten Zweig ist ein Stickoxidspeicher angeordnet, wobei er in einem ersten Betriebszustand zumindest einen Teil der Stickoxide, die in dem Abgas, das den zweiten Zweig durchströmt, enthalten sind, durch den Stickoxidspeicher speicherbar sind und in einem zweiten Betriebszustand die zuvor in dem Stickoxidspeicher gespeicherten Stickoxide wieder freigebbar und dem SCR-Katalysator zuführbar sind. Die in dem Abgas, das den ersten Zweig durchströmt, enthaltenen Stickoxide werden nicht zwischengespeichert und direkt dem SCR-Katalysator zugeführt. Durch das Anordnen des Stickoxidspeichers in einem parallel geschalteten zweiten Zweig muss, im Gegensatz zum Stand der Technik , bei dem der Stickoxidspeicher und des SCR-Katalysators in Reihe geschaltet sind" nicht das gesamte von der Brennkraftmaschine abgegebene Abgas den Stickoxidspeicher durchströmen, sondern das Abgas kann zwischen dem ersten und dem zweiten Zweig aufgeteilt werden. Hierdurch wird erreicht, dass der Stickoxidspeicher kleiner dimensioniert werden kann und somit der benötigte Bauraum und die Kosten reduziert werden. Ferner wird durch den parallelen Aufbau der benötigte Bauraum der Abgasreinigungsvorrichtung verringert.

Bei einer bevorzugten Ausführungsform der Erfindung sind sowohl der erste Zweig als auch der zweite Zweig derart dimensioniert, dass das gesamte von der Brennkraftmaschine abgegebene Abgas jeweils durch einen der beiden Zweige geleitet werden kann, und das Abgas somit nicht aufgeteilt werden muss.

Es ist vorteilhaft, wenn eine Abgasverteilungseinheit vorgesehen ist, mit deren Hilfe der Anteil des von der Brennkraftmaschine abgegebenen Abgases, der den zweiten Zweig durchströmt, einstellbar ist. Bei dieser Abgasverteilungseinheit handelt es sich insbesondere um eine Klappe und/oder ein Ventil. Die Abgasverteilungseinheit kann sowohl stromaufwärts von dem ersten und dem zweiten Zweig als auch stromabwärts von dem ersten und dem zweiten Zweig angeordnet sein und ist insbesondere derart angeordnet, dass durch sie der erste und der zweite Zweig miteinander verbunden sind. Durch das Vorsehen einer solchen Abgasverteilungseinheit wird erreicht, dass der Anteil des Abgases der den zweiten Zweig und somit den Stickoxidspeicher durchströmt eingestellt werden kann. Auf diese Weise kann die von dem Stickoxidspeicher zwischengespeicherte Stickoxidmenge und somit ebenfalls die in dem SCR-Katalysator pro Zeiteinheit ankommende Stickoxidmenge eingestellt werden. Hierbei ist es insbesondere möglich, die Verteilung des Abgases zwischen den beiden Zweigen derart einzustellen, dass die in dem SCR-Katalysator pro Zeiteinheit zugeführte Stickoxidmenge ungefähr konstant ist. Auf diese Weise kann, verglichen mit einem Abgassystem, bei dem kein parallel geschalteter Stickoxidspeicher vorgesehen ist, ein kleiner dimensionierter SCR-Katalsysator verwendet werden, so dass Kosten und Bauraum eingespart werden.

In dem ersten Betriebszustand leitet die Abgasverteilungseinheit vorzugsweise mindestens einen Teil des von der Brennkraftmaschine abgegebenen Abgases in den zweiten Zweig ein, so dass im ersten Betriebszustand zumindest ein Teil der in dem Teil des Abgases, das den zweiten Zweig durchströmt, enthaltene Stickoxide durch den Stickoxidspeicher gespeichert werden können. Bei einer bevorzugten Ausführungsform der Erfindung leitet die Abgasverteilungseinheit im ersten Betriebszustand das gesamte von der Brennkraftmaschine abgegebene Abgas durch den zweiten Zweig, so dass zumindest ein Teil, vorzugsweise alle, in dem Abgas enthaltenen Stickoxide durch den Stickoxidspeicher gespeichert werden. Im zweiten Betriebszustand gibt der Stickoxidspeicher zumindest einen Teil der aufgenommenen Stickoxide, vorzugsweise alle durch ihn gespeicherten Stickoxide, wieder frei und führt diese dem SCR-Katalysator zu.

Der erste Betriebszustand ist insbesondere derjenige Betriebszustand, bei dem die Ist-Temperatur des SCR-Katalysators unterhalb einer Arbeitstemperatur des SCR-Katalysators ist. Die Arbeitstemperatur des SCR-Katalysators ist diejenige Temperatur, die mindestens benötigt wird, damit durch den SCR-Katalysator die in dem Abgas enthaltenen Stickoxide zu Stickstoff und Wasser reduziert werden. Der erste Betriebszustand ist somit insbesondere die Warmlaufphase der Vorrichtung bei einem Kaltstart der Brennkraftmaschine. Der zweite Betriebszustand dahingegen ist derjenige Betriebszustand, bei dem der SCR-Katalysator die Arbeitstemperatur erreicht hat, also nachdem die Warmlaufphase abgeschlossen ist und der SCR-Katalysator somit die im Abgas enthaltenen Stickoxide reduzieren kann. Der Stickoxidspeicher gibt die in ihm gespeicherten Stickoxide dann frei, wenn der SCR-Katalysator die benötigte Arbeitstemperatur erreicht hat und somit auch die im Stickoxidspeicher zwischengespeicherten Stickoxide reduzieren kann.

Die von dem Stickoxidspeicher speicherbare Stickoxidmenge hängt insbesondere von der Temperatur des Stickoxidspeichers ab. Je wärmer der Stickoxidspeicher ist, umso weniger Stickoxide können gespeichert werden. Überschreitet die Temperatur des Stickoxidspeichers eine voreingestellte Desorptionstemperatur, so werden die gespeicherten Stickoxide wieder freigegeben. Die Temperatur des Stickoxidspeichers wird insbesondere durch die Temperatur und die Menge des den Stickoxidspeichers durchströmenden Abgases bestimmt. Über das Einstellen der Menge des Abgases, die den zweiten Zweig durchströmt, kann somit auch die Temperatur des Stickoxidspeichers und somit sein Speicherverhalten eingestellt werden. Somit wird durch die Parallelschaltung des Stickoxidspeichers im Gegensatz zu der aus dem Stand der Technik bekannten Reihenschaltung eine thermische Entkopplung der Temperatur des Stickoxidspeichers und der Temperatur des Abgases erreicht. Wird das gesamte Abgas über die Abgasverteilungseinheit dem ersten Zweig zugeführt, bevor der Stickoxidspeicher die Desorptionstemperatur erreicht, so wird dieser nicht mehr weiter durch das Abgas erwärmt und die Stickoxide bleiben gespeichert. Auf diese Weise kann ein längeres Speichern erreicht werden, auch wenn das Abgas die Desorptionstemperatur erreicht oder überschritten hat. Soll der Stickoxidspeicher entleert werden, leitet die Abgasverteilungseinheit wieder Abgas in den zweiten Zweig, so dass der Stickoxidspeicher, sofern das Abgas warm genug ist, die Desorptionstemperatur erreicht und die gespeicherten Stickoxide freigeben werden. Wenn die Abgasverteilungseinheit, nachdem der Stickoxidspeicher die Desorptionstemperatur erreicht oder überschritten hat, wieder das gesamte Abgas dem ersten Zweig zuführt, kühl der Stickoxidspeicher ab, so dass er, nach dem Unterschreiten der Desorptionstemperatur, wieder Stickoxide speichern kann.

Es ist vorteilhaft, wenn in einem dritten Betriebszustand die Abgasverteilungseinheit das gesamte von der Brennkraftmaschine abgegebene Abgas durch den ersten Zweig leitet. Dieser dritte Betriebszustand ist insbesondere der reguläre Betriebszustand der Vorrichtung, d.h. der Zustand, bei dem der SCR-Katalysator seine Betriebstemperatur erreicht hat, so dass alle im Abgas enthaltenen Stickoxide direkt durch den SCR-Katalysator reduziert werden können, ohne dass eine Zwischenspeicherung notwendig ist. Da in diesem dritten Betriebszustand der zweite Zweig nicht durch Abgase durchströmt wird, kommt der Stickoxidspeicher ebenfalls nicht mit Abgasen in Kontakt, so dass Verschleiss und Beschädigungen vorgebeugt wird und die Lebensdauer erhöht wird. Ferner kann der Stickoxidspeicher hierdurch abkühlen, so dass bei Bedarf mehr Stickoxide durch ihn gespeichert werden können.

Bei einer besonders bevorzugten Ausführungsform der Erfindung ist stromaufwärts der Abgasverteilungseinheit ein Sensor zur Ermittlung des Stickoxidanteils im Abgas angeordnet. Ferner ist eine Steuerungseinheit vorgesehen, die den ermittelten Stickoxidanteil mit einem voreingestellten Grenzwert vergleicht und die Abgasverteilungseinheit derart ansteuert, dass zumindest ein Teil des Abgases dem zweiten Zweig zugeführt wird, wenn der ermittelte Stickoxidanteil den Grenzwert überschreitet. Hierdurch wird erreicht, dass beim Auftreten von hohen Stickoxidanteilen, sogenannten Stickoxidspitzen, ein Teil des Abgases dem Stickoxidspeicher zugeführt wird und zumindest ein Teil der der in diesem Abgasanteil enthaltenen Stickoxide zwischengespeichert werden. Auf diese Weise wird der am SCR-Katalysator ankommende Stickoxidanteil reduziert, so dass auch bei einem kleiner dimensionierten SCR-Katalysator sichergestellt ist, dass alle den SCR-Katalysator durchströmenden im Abgas enthaltene Stickoxide reduziert werden können. Alternativ oder zusätzlich zum Stickoxidanteil kann auch die von der Brennkraftmaschine pro Zeiteinheit angegebene Stickoxidmenge mit Hilfe des Sensors ermittelt werden.

Die im Stickoxidspeicher zwischengespeicherten Stickoxide werden insbesondere dann wieder freigegeben und dem SCR-Katalysator zugeführt, wenn der Anteil der im Abgas enthaltenen Stickoxide geringer als der Grenzwert ist und somit die dem SCR-Katalysator zugeführte Stickoxidmenge vollständig reduziert werden kann.

Es ist besonders vorteilhaft, wenn die Steuerungseinheit die Differenz aus dem ermittelten Stickoxidanteil und dem Grenzwert ermittelt und den Anteil des Abgases, der dem zweiten Zweig zugeführt wird, in Abhängigkeit der ermittelten Differenz einstellt. Je größer die ermittelte Differenz ist, d.h. je mehr der Stickoxidanteil den Grenzwert überschreitet, umso größer ist der Anteil des Abgases, der dem zweiten Zweig und somit den Stickoxidspeicher zugeführt wird. Auf diese Weise wird erreicht, dass umso mehr Stickoxide gespeichert werden, je größer der Stickoxidanteil im Abgas ist. Der Anteil des Abgases, der dem zweiten Zweig und somit dem Stickoxidspeicher zugeführt wird, wird hierbei von der Steuerungseinheit insbesondere derart eingestellt, dass die dem SCR-Katalysator pro Zeiteinheit zugeführte Stickoxidmenge maximal so groß ist wie diejenige Stickoxidmenge, die vom SCR-Katalysator pro Zeiteinheit maximal reduziert werden kann. Auf diese Weise wird verhindert, dass Stickoxide im Abgas den SCR-Katalysator durchlaufen ohne reduziert zu werden und in die Umwelt abgegeben werden.

Bei einer besonders bevorzugten Ausführungsform der Erfindung wird der parallel geschaltete Stickoxidspeicher sowohl zum Speichern von Stickoxiden während der Warmlaufphase als auch zum Speichern von Stickoxiden beim Auftreten von Stickoxidspitzen während des Betriebes der Vorrichtung genutzt.

Des Weiteren ist es vorteilhaft, wenn die Abgasverteilungseinheit im zweiten Betriebszustand zumindest einen Teil des von der Brennkraftmaschine abgegebenen Abgases in den zweiten Zweig einleitet und wenn der Stickoxidspeicher zumindest einen Teil der durch ihn gespeicherten Stickoxide an dieses Abgas abgibt. Hierdurch wird auf einfache Weise erreicht, dass der Stickoxidspeicher wieder entleert wird und somit bei Bedarf erneut Stickoxide speichern kann. Durch das Abgas wird der Stickoxidspeicher erwärmt, so dass er, wenn er mindestens die Desorptionstemperatur erreicht hat, die gespeichert Stickoxide abgibt.

Ferner ist es vorteilhaft, wenn eine Hydrolysestrecke zur Hydrolyse von stromaufwärts der Hydrolysestrecke eingespritzter wässriger Harnstofflösung im ersten Zweig angeordnet ist. Hierdurch wird eine besonders kompakte Bauweise der Vorrichtung erreicht.

Alternativ kann die Hydrolysestrecke auch stromabwärts des ersten Zweiges und des zweiten Zweiges angeordnet sein.

Ein weiterer Aspekt der Erfindung betrifft ein Verfahren zur Reinigung des Abgases einer Brennkraftmaschine. Das durch den unabhängigen Verfahrensanspruch beschriebene Verfahren kann auf die gleiche Weise weitergebildet werden wie die Vorrichtung nach Anspruch 1. Insbesondere kann das Verfahren mit den in den auf die Vorrichtung rückbezogenen abhängigen Patentansprüchen angegebenen Merkmale bzw. entsprechenden Verfahrensmerkmalen weitergebildet werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigt:

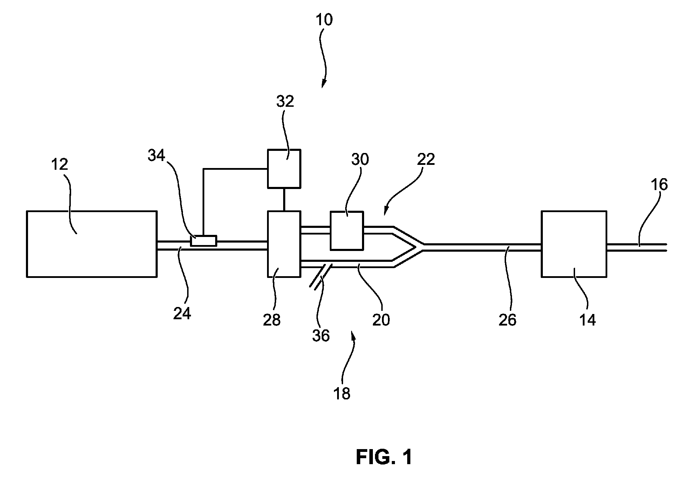

- Figur 1: eine schematische Darstellung einer Vorrichtung zur Reinigung des Abgases einer Brennkraftmaschine.

In Figur 1 ist eine schematische Darstellung einer Vorrichtung 10 zur Reinigung des Abgases einer Brennkraftmaschine 12 und der Brennkraftmaschine 12 dargestellt. Bei der Brennkraftmaschine 12 handelt es sich insbesondere um einen Dieselmotor. Alternativ kann es sich auch um einen Benzinmotor, einen Motoren mit Brennstoffmischbetrieb oder einen Motor mit Gasbetrieb handeln.

Die Vorrichtung 10 zur Reinigung des Abgases der Brennkraftmaschine 12 umfasst einen SCR-Katalysator 14 zur selektiven analytischen Reduktion von in dem von der Brennkraftmaschine 12 abgegebenen Abgas enthaltenen Stickoxiden. Bei einer solchen selektiven katalytischen Reduktion werden die im Abgas enthaltenen Stickoxide mit Hilfe von Ammoniak zu Wasser und Stickstoff reduziert. Das Abgas wird, nach dem es den SCR-Katalysator 14 durchlaufen hat, über ein Abgasrohr 16 abgeführt.

Das von der Brennkraftmaschine 12 abgegebene Abgas wird über ein Abgaszuführsystem 18 von der Brennkraftmaschine 12 dem SCR-Katalysator 14 zugeführt. Das Abgaszuführsystem 18 umfasst vier Leitungsabschnitte 20 bis 26, wobei der dritte Leitungsabschnitt 24 das von der Brennkraftmaschine 12 abgegebene Abgas von der Brennkraftmaschine 12 wegführt und einer Abgasverteilungseinheit 28 zuführt. Stromabwärts der Abgasverteilungseinheit 28 sind parallel zueinander der erste Leitungsabschnitt 20 und der zweite Leitungsabschnitt 22 angeordnet, so dass durch den ersten Leitungsabschnitt 20 und den zweiten Leitungsabschnitt 22 ein erster und ein parallel dazu geschalteter zweiter Zweig, durch die das Abgas geführt werden kann, ausgebildet sind. Stromabwärts des ersten und des zweiten Leitungsabschnitts 20, 22 ist ein vierter Leitungsabschnitt 26 angeordnet, durch den das gesamte von der Brennkraftmaschine 12 abgegebene Abgas geleitet wird und der sich stromaufwärts an den SCR-Katalysator anschließt. Durch den ersten Leitungsabschnitt 20 ist insbesondere eine Hydrolysestrecke ausgebildet, in der über eine Harnstoffeinspritzeinheit 36 in den Abgasstrom eingespritzte wässrige Harnstofflösung, sogenanntes Adblue, zu Ammoniak und Kohlenstoffdioxid reagiert. Bei dieser Hydrolysestrecke 36 wird der für den SCR-Katalysator 14 benötigte Harnstoff durch die zuvor beschriebene Hydrolysereaktion bereitgestellt.

Über die Abgasverteilungseinheit 28 wird der Anteil des Abgases, der dem ersten Leitungsabschnitt 20 zugeführt wird, und der Anteil des Abgases, der dem zweiten Leitungsabschnitt 22 zugeführt wird, eingestellt. Die Vorrichtung 10 umfasst insbesondere eine Steuerungseinheit 32, mit deren Hilfe die Abgasverteilungseinheit 28 gesteuert wird. Die Abgasverteilungseinheit 28 vorzugsweise als eine Klappe und/oder ein Ventil ausgebildet. Der erste Leitungsabschnitt 20 und der zweite Leitungsabschnitt 22 sind derart ausgelegt, dass bei einer entsprechenden Einstellung der Abgasverteilungseinheit 28 das gesamte von der Brennkraftmaschine 12 abgegebene und über den dritten Leitungsabschnitt 24 der Abgasverteilungseinheit 28 zugeführte Abgas sowohl durch den ersten Leitungsabschnitt 20 als auch durch den zweiten Leitungsabschnitt 22 geführt werden kann. Bei einer alternativen Ausführungsform der Erfindung kann auch nur der erste Leitungsabschnitt 20 derart dimensioniert sein, dass das gesamte von der Brennkraftmaschine 12 abgegebene Abgas durch ihn geführt werden kann, wohingegen der zweite Leitungsabschnitt 22 kleiner dimensioniert ist, so dass nur ein Teil des von der Brennkraftmaschine 12 abgegebenen Abgases durch ihn geführt werden kann.

Der zweite Leitungsabschnitt 22 umfasst einen Stickoxidspeicher 30 zum temporären Speichern von in dem den zweiten Leitungsabschnitt 22 durchströmenden Abgas enthaltenen Stickoxiden. Auf diese Weise kann die Stickoxidmenge, die dem SCR-Katalysator 14 pro Zeiteinheit zugeführt wird, eingestellt werden, indem in dem Abgas, das den zweiten Leitungsabschnitt 22 durchströmt, enthaltene Stickoxide zunächst von dem Stickoxidspeicher 30 gespeichert werden und später wieder von dem Stickoxidspeicher 30 abgegeben und dem Abgas zugeführt werden. Dieses Einstellen der Stickoxidmenge, die dem SCR-Katalysator pro Zeiteinheit zugeführt wird, wird insbesondere bei folgenden beiden Anwendungsfällen eingesetzt. Der erste Anwendungsfall ist der Kaltstart der Vorrichtung 10, der zweite Anwendungsfall ist die Reduktion von Stickoxidspitzen im Abgas. Alternativ kann das Einstellen der Stickoxidmenge über den Stickoxidspeicher 30 auch bei anderen Anwendungsfällen eingesetzt werden.

Der SCR-Katalysator 14 benötigt für die Reduktion der im Abgas enthaltenen Stickoxide zu Stickstoff und Wasser eine Arbeitstemperatur, welche von der konkreten Ausführung des SCR-Katalysators abhängt. Bei einem Kaltstart der Vorrichtung 10 hat der SCR-Katalysator 14 noch nicht diese Arbeitstemperatur erreicht, sondern die Temperatur des SCR-Katalysators 14 liegt unterhalb dieser Arbeitstemperatur. Der SCR-Katalysator 14 wird erst durch das ihn durchströmende von der Brennkraftmaschine 12 abgegebene Abgas nach und nach erwärmt, bis er seine Arbeitstemperatur erreicht hat. Die Zeit, die vom Start der Vorrichtung 10 benötigt wird, bis der SCR-Katalysator seine Arbeitstemperatur erreicht hat, wird auch als Warmlaufphase bezeichnet. Während dieser Warmlaufphase ist nicht gewährleistet, dass alle im Abgas enthaltenen Stickoxide reduziert werden, wenn das gesamte Abgas mit allen in ihm enthaltenen Stickoxiden dem SCR-Katalysator 14 zugeführt wird.

Um ein Austreten von Stickoxiden an die Umwelt zu verhindern, wird daher zumindest ein Teil des von der Brennkraftmaschine 12 abgegebenen Abgases in der Warmlaufphase über die Abgasverteilungseinheit 28 in den zweiten Leitungsabschnitt 22 eingeleitet, so dass zumindest ein Teil der in diesem Abgasanteil enthaltenen Stickoxide über den Stickoxidspeicher 30 gespeichert werden. Bei einer bevorzugten Ausführungsform der Erfindung wird während der Warmlaufphase das gesamte von der Brennkraftmaschine 12 abgegebene Abgas über die Abgasverteilungseinheit 28 dem zweiten Leitungsabschnitt 22 und somit dem Stickoxidspeicher zugeführt. Auf diese Weise wird erreicht, dass die dem SCR-Katalysator 14 während der Warmlaufphase zugeführte Stickoxidmenge reduziert wird, so dass von dem SCR-Katalysator weniger Stickoxide reduziert werden müssen und somit auch in der Warmlaufphase keine oder nur eine geringe Anzahl von Stickoxiden den SCR-Katalysator durchlaufen und an die Umwelt abgegeben werden.

Nachdem der SCR-Katalysator 14 seine Arbeitstemperatur erreicht hat, werden von dem Stickoxidspeicher 30 die in ihm gespeicherten Stickoxide an das den zweiten Leitungsabschnitt 22 durchströmende Abgas abgegeben und somit auch dem SCR-Katalysator 14 zugeführt, wo sie zu Stickstoff und Wasser reduziert werden. Das Entleeren des Stickoxidspeichers wird insbesondere über die Temperatur des Stickoxidspeichers 30 gesteuert, indem dem Strickoxidspeicher 30 zumindest so lange warmes Abgas zugeführt wird, bis er seine Desorptionstemperatur erreicht oder überschritten hat und die Stickoxide freigegeben werden. Nachdem alle im Stickoxidspeicher 30 gespeicherten Stickoxide an das den zweiten Leitungsabschnitt 22 durchströmende Abgas abgegeben wurden, und der Stickoxidspeicher 30 somit entleert ist, leitet die Abgasverteilungseinheit 28 das gesamte von der Brennkraftmaschine 12 abgegebene Abgas über den ersten Leitungsabschnitt 20 dem SCR-Katalysator 14 zu. Der Stickoxidspeicher 30 kühl nach und nach ab, so dass bei Bedarf erneut Stickoxide gespeichert werden können, Auf diese Weise wird durch die parallele Anordnung des ersten und des zweiten Leitungsabschnitts 20, 22 erreicht, dass der Stickoxidspeicher 30 nur während der Warmlaufphase und so lange, bis die in ihm gespeicherten Stickoxide wieder abgegeben sind, von dem Abgas durchströmt wird und nicht wie bei bekannten Abgasreinigungsvorrichtungen, bei denen der Stickoxidspeicher in Reihe angeordnet ist, ständig vom Abgas durchströmt wird, so dass die Lebensdauer des Stickoxidspeichers 30 erhöht wird. Ferner wird durch die parallele Anordnung des Stickoxidspeichers 30 erreicht, dass dieser verglichen mit bekannten Abgasreinigungsvorrichtungen, kleiner dimensioniert werden kann, da nicht das gesamte Abgas durch ihn geführt werden muss, sondern ein Teil des von der Brennkraftmaschine 12 abgegebenen Abgases auch über den ersten Leitungsabschnitt 20 dem SCR-Katalysator 14 zugeführt werden kann.

Der zweite Anwendungsfall ist das Abmildern von Stickoxidspitzen. Unter einer Stickoxidspitze wird insbesondere ein Betriebszustand verstanden, bei dem die im Abgas pro Zeiteinheit enthaltene Stickoxidmenge deutlich über der während des regulären Betriebes im Abgas enthaltenen Stickoxidmenge pro Zeiteinheit ist. Solche Stickoxidspitzen können bei Abgasreinigungsvorrichtungen ohne Stickoxidspeicher 30 dazu führen, dass dem SCR-Katalysator 14 so viele Stickoxide zugeführt werden, dass diese vom SCR-Katalysator 14 nicht vollständig reduziert werden können, und ein Teil der Stickoxide den SCR-Katalysator 14 durchlaufen und an die Umwelt abgegeben werden. Das Abmildern von Stickoxidspitzen durch das temporäre Zwischenspeichern von Stickoxiden über den Stickoxidspeicher 30 kann sowohl in Form einer Steuerung als auch in Form einer Regelung erfolgen.

Die Vorrichtung 10 umfasst einen Sensor 34, der im dritten Leitungsabschnitt 24 angeordnet ist, und mit dessen Hilfe ein Ist-Wert der im von der Brennkraftmaschine 12 abgegebenen Abgas enthaltenen Stickoxidmenge pro Zeiteinheit und/oder des im Abgas enthaltenen Stickoxidanteils ermittelt wird. Dieser ermittelte Ist-Wert wird mit Hilfe der Steuerungseinheit 32 mit einem voreingestellten Grenzwert verglichen. Liegt der ermittelte Ist-Wert oberhalb des Grenzwertes, so steuert die Steuerungseinheit 32 die Abgasverteilungseinheit 28 derart an, dass zumindest ein Teil des von der Brennkraftmaschine 12 abgegebenen Abgases dem zweiten Leitungsabschnitt 22 und somit dem Stickoxidspeicher 30 zugeführt wird. Die Steuerungseinheit 32 ermittelt insbesondere die Differenz zwischen dem über den Sensor 34 ermittelten Ist-Wert und den Grenzwert und steuert die Abgasverteilungseinheit 28 derart an, dass der Anteil des Abgases, der dem zweiten Leitungsabschnitt 22 zugeführt wird, umso größer ist, je größer die Differenz zwischen dem Ist-Wert und dem Grenzwert ist.

Mit Hilfe des Stickoxidspeichers 30 wird zumindest ein Teil, vorzugsweise alle, der in dem dem zweiten Leitungsabschnitt 22 zugeführten Abgas enthaltenen Stickoxide gespeichert. Auf diese Weise wird erreicht, dass die Stickoxidmenge, die dem SCR-Katalysator 14 pro Zeiteinheit zugeführt wird, reduziert wird, und somit die Stickoxidspitze abgemildert wird. Der voreingestellte Grenzwert und der Anteil des Abgases, der dem zweiten Leitungsabschnitt 22 zugeführt wird, ist insbesondere derart eingestellt, dass so viele Stickoxide von dem Stickoxidspeicher 30 zwischengespeichert werden, dass der SCR-Katalysator 14 pro Zeiteinheit nur so viele Stickoxide zugeführt werden, wie von ihm pro Zeiteinheit auch reduziert werden können. Auf diese Weise wird sichergestellt, dass dem SCR-Katalysator 14 zu jeder Zeit nur so viel Stickoxide zugeführt werden, wie von ihm reduziert werden können und somit keine Stickoxide oder nur eine geringere Menge an Stickoxiden an die Umwelt abgegeben werden. Ebenso wird hierdurch erreicht, dass der SCR-Katalysator 14, verglichen mit Abgasreinigungsvorrichtungen, die keine Stickoxidspeicher 30 enthalten, kleiner dimensioniert werden kann, da die dem SCR-Katalysator 14 zugeführte Stickoxidmenge über einen Stickoxidspeicher 30 begrenzt werden kann.

Der Stickoxidspeicher 30 gibt die in ihm gespeicherten Stickoxide wieder frei und führt diese dem in ihm strömenden Abgas zu, wenn die Stickoxidspitze vorüber ist, und in dem Abgas pro Zeiteinheit nur noch eine geringere Stickoxidmenge enthalten ist. Hierzu wird der Stickoxidspeicher 30 so lange von warmen Abgasen durchströmt, bis er mindestens die Desorptionstemperatur erreicht hat. Die vom Stickoxidspeicher 30 freigegebenen Stickoxide werden dem SCR-Katalysator 14 zugeführt und somit ebenfalls reduziert.

Erreicht der Stickoxidspeicher 30 seine maximale Aufnahmemenge bevor die Stickoxidspitze vorüber ist, so steuert die Steuerungseinheit 32 die Abgasverteilungseinheit 28 derart an, dass das gesamte Abgas dem ersten Leitungsabschnitt 20 zugeführt wird. Wird mit Hilfe des Sensors 34 ermittelt, dass die Stickoxidspitze vorüber ist und somit die im Abgas enthaltene Stickoxidmenge unterhalb des Grenzwertes liegt, so steuert die Steuerungseinheit 32 die Abgasverteilungseinheit 28 wiederum derart an, dass ein Teil oder das gesamte Abgas durch den zweiten Leitungsabschnitt 22 und somit den Stickoxidspeicher 30 geführt wird, damit die im Stickoxidspeicher 30 zwischengespeicherten Stickoxide wieder an das Abgas abgegeben und dem SCR-Katalysator 14 zur Reduktion zugeführt werden können. Nachdem die im Stickoxidspeicher 30 zwischengespeicherten Stickoxide wieder freigegeben und dem SCR-Katalysator 14 zugeführt wurden, führt die Abgasverteilungseinheit 28 wiederum das gesamte Abgas dem ersten Leitungsabschnitt 20 zu, so dass, sobald eine weitere Stickoxidspitze auftritt, der Stickoxidspeicher 30, sofern er soweit abgekühlt ist, dass die Desorptionstemperatur unterschritten ist, wieder frei ist und erneut Stickoxide zwischenspeichern kann.

Sollte eine erneute Stickoxidspitze auftreten, bevor der Stickoxidspeicher 30 vollständig entleert wurde, so können auch vor der vollständigen Entleerung des Stickoxidspeichers 30 wieder Stickoxide im Stickoxidspeicher 30 zwischengespeichert werden.

Der Stickoxidspeicher 30 umfasst insbesondere ein Zeolith zur Speicherung der Stickoxide. Durch das parallele Anordnen des Stickoxidspeichers 30 in einem parallel zum ersten Zweig 20 geschalteten zweiten Zweig 22 wird zum einen eine kompakte Bauweise der Vorrichtung 10 erreicht und zum anderen wird hierdurch erzielt, dass der Stickoxidspeicher 30, verglichen mit einer Schaltung des Stickoxidspeichers 30 in Reihe kleiner dimensioniert werden kann. Hierdurch werden Kosten und Bauraum eingespart. Der zweite Leitungsabschnitt 22 wird auch als schaltbarer Bypass bezeichnet.

Bei einer alternativen Ausführungsform der Erfindung kann die Abgasverteilungseinheit 28 auch stromabwärts des Leitungsabschnitts 20 und 22 und stromaufwärts des vierten Leitungsabschnitts 26 angeordnet sein. Bei einer weiteren alternativen Ausführungsform der Erfindung kann auch der vierte Leitungsabschnitt 26 anstelle des ersten Leitungsabschnitts 20 als Hydrolysestrecke für die Reaktion von wässriger Harnstofflösung zu Ammoniak und Kohlenstoffdioxid dienen. In diesem Fall ist die Harnstoffeinspritzeinheit 36 im vierten Leitungsabschnitt 26 angeordnet.

### Bezugszeichenliste

- 10: Vorrichtung
- 12: Brennkraftmaschine
- 14: SCR-Katalysator
- 16: Abgasrohr
- 18: Abgaszuführsystem
- 20 bis 26: Leitungsabschnitt
- 28: Abgasverteilungseinheit
- 30: Stickoxidspeicher
- 32: Steuerungseinheit
- 34: Sensor
- 36: Harnstoffeinspritzeinheit

## Patentansprüche

1. Vorrichtung zur Reinigung des Abgases einer Bennkraftmaschine,
mit einem SCR-Katalysator (14) zur selektiven katalytischen Reduktion von in dem Abgas befindlichen Stickoxiden, und
mit einem Abgaszuführsystem (18), das das Abgas von der Brennkraftmaschine (12) dem SCR-Katalysator (14) zuführt,
**dadurch gekennzeichnet, dass** das Abgaszuführsystem (18) einen ersten Zweig (20) zum Zuführen von Abgas von der Brennkraftmaschine (12) zu dem SCR-Katalysator (14) und einen dazu parallel geschalteten zweiten Zweig (22) zum Zuführen von Abgas von der Brennkraftmaschine (12) zu dem SCR-Katalysator (14) umfasst, und
dass im zweiten Zweig (22) ein Stickoxidspeicher (30) angeordnet ist,
wobei in einem ersten Betriebszustand zumindest ein Teil der Stickoxide, die in dem Abgas, das den zweiten Zweig (22) durchströmt, enthalten sind, durch den Stickoxidspeicher (30) speicherbar sind, und
wobei in einem zweiten Betriebszustand zumindest ein Teil der zuvor im Stickoxidspeicher (30) gespeicherten Stickoxide wieder freigebbar und dem SCR-Katalysator (14) zuführbar sind.

2. Vorrichtung (10) nach Anspruch 1, **dadurch gekennzeichnet, dass** mit Hilfe einer Abgasverteilungseinheit (28) der Anteil des von der Brennkraftmaschine (12) abgegeben Abgases, der den zweiten Zweig (22) durchströmt, einstellbar ist.

3. Vorrichtung (10) nach Anspruch 2, **dadurch gekennzeichnet, dass** im ersten Betriebszustand die Abgasverteilungseinheit (28) zumindest einen Teil des von der Brennkraftmaschine (12) abgegebenen Abgases, vorzugsweise das gesamte von der Brennkraftmaschine (12) abgegebene Abgas, in den zweiten Zweig (22) einleitet.

4. Vorrichtung (10) nach einem der Ansprüche 2 oder 3, **dadurch gekennzeichnet, dass** die Abgasverteilungseinheit (28) in einem dritten Betriebszustand das gesamte von der Brennkraftmaschine (12) abgegebene Abgas in den ersten Zweig (20) einleitet.

5. Vorrichtung (10) nach einem der vorhergehenden Ansprüche, **dadurch gekennzeichnet, dass** im ersten Betriebszustand die Ist-Temperatur des SCR-Katalysators (14) unterhalb einer Arbeitstemperatur des SCR-Katalysators (14), die zur katalytischen Reduktion von Stickoxiden mindestens benötigt wird, ist, und dass im zweiten Betriebszustand die Ist-Temperatur des SCR-Katalysators (14) mindestens so groß wie die Arbeitstemperatur ist.

6. Vorrichtung (10) nach einem der Ansprüche 2 bis 4, **dadurch gekennzeichnet, dass** stromaufwärts der Abgasverteilungseinheit (28) ein Sensor (34) zur Ermittlung der Stickoxidmenge im Abgas pro Zeiteinheit angeordnet ist, dass eine Steuerungseinheit (32) die ermittelte Stickoxidmenge mit einem voreingestellten Grenzwert vergleicht, und dass die Steuerungseinheit (32) die Abgasverteilungseinheit (28) derart ansteuert, dass zumindest ein Teil des Abgases dem zweiten Zweig (22) zugeführt wird, wenn die ermittelte Stickoxidmenge den Grenzwert überschreitet.

7. Vorrichtung (10) nach Anspruch 6, **dadurch gekennzeichnet, dass** die Steuerungseinheit (32) die Differenz zwischen der ermittelten Stickoxidmenge und dem Grenzwert ermittelt, und dass die Steuerungseinheit (32) den Anteil des Abgases, der dem zweiten Zweig (22) zugeführt wird, in Abhängigkeit der ermittelten Differenz einstellt.

8. Vorrichtung (10) nach einem der Ansprüche 6 oder 7, **dadurch gekennzeichnet, dass** der Stickoxidspeicher (30) zumindest einen Teil der in dem ihn durchströmenden Abgas enthaltenen Stickoxide zumindest temporär speichert.

9. Vorrichtung (10) nach einem den Ansprüche 2 bis 8, **dadurch gekennzeichnet, dass** die Abgasverteilungseinheit (28) im zweiten Betriebszustand zumindest einen Teil des von der Brennkraftmaschine (12) abgegebenen Abgases in den zweiten Zweig (22) einleitet, und dass der Stickoxidspeicher (30) zumindest einen Teil der durch ihn gespeicherten Stickoxide an dieses Abgas abgibt.

10. Vorrichtung (10) nach einem der vorhergehenden Ansprüche, **dadurch gekennzeichnet, dass** stromabwärts des ersten Zweiges (20) und des zweiten Zweiges (22) und stromaufwärts des SCR-Katalysators (14) eine Hydrolysestrecke (26) zur Hydrolyse von Ammoniak aus stromaufwärts der Hydrolysestrecke (26) eingespritzter wässeriger Harnstofflösung angeordnet ist.

11. Vorrichtung (10) nach einem der Ansprüche 1 bis 9, **dadurch gekennzeichnet, dass** im ersten Zweig (20) eine Hydrolysestrecke zur Hydrolyse von Ammoniak aus stromaufwärts der Hydrolysestrecke eingespritzter wässeriger Harnstofflösung angeordnet ist.

12. Verfahren zur Reinigung des Abgases einer Bennkraftmaschine,
bei dem in einem ersten Betriebszustand zumindest ein Teil des von der Brennkraftmaschine (12) abgegebenen Abgases einem parallel zu einem ersten Zweig (20) geschalteten zweiten Zweig (22) eines Abgaszuführsystem (18), das das Abgas von der Brennkraftmaschine (12) einem SCR-Katalysator (14) zuführt, zugeführt wird, und zumindest ein Teil der Stickoxide, die in dem Abgas, das den zweiten Zweig (22) durchströmt, enthalten sind, durch einen Stickoxidspeicher (30) gespeichert werden, und
bei dem in einem zweiten Betriebszustand die zuvor in dem Stickoxidspeicher (30) gespeicherten Stickoxide wieder freigeben werden und dem SCR-Katalysator (14) zugeführt werden.
